# EUROPÄISCHE PATENTSCHRIFT

(11) **EP 2 647 898 B1**
(45) Veröffentlichungstag und Bekanntmachung des Hinweises auf die Patenterteilung: **24.12.2014**
(21) Anmeldenummer: 12162961.2
(22) Anmeldetag: 03.04.2012
(51) Int. Cl.: F16L 41/12

(54) **Vorrichtung zum Verbinden einer Düse oder eines abzweigenden Rohres mit einem Rohr**
Device for connecting a nozzle or a branching tube with a tube
Dispositif destiné à relier une buse ou un tuyau de détournement avec un tuyau

(43) Veröffentlichungstag der Anmeldung: 09.10.2013
(73) Patentinhaber: Minimax GmbH & Co. KG, 23840 Bad Oldesloe (DE)
(72) Erfinder: Zlatintsis, Chrysafis, 23554 Lübeck (DE)
(74) Vertreter: Lüdtke, Frank

(56) Entgegenhaltungen:
- DE-C1- 3 818 746
- US-A- 4 858 964
- US-A1- 2002 007 851

## Beschreibung

Die Erfindung betrifft eine Vorrichtung zum Verbinden einer Düse oder eines abzweigendes Rohres mit einem Rohr entsprechend dem Oberbegriff des ersten Patentanspruches.

Die Erfindung ist überall dort anwendbar, wo eine Düse oder ein abzweigendes Rohr mit einem Rohr zu verbinden ist. Bei dem Rohr handelt es sich um handelsübliches Rohr vorzugsweise aus Metall oder Kunststoff, wobei in dem Rohr eine oder mehrere Öffnungen angeordnet sind, an denen ein oder mehrere Düsen oder abzweigende Rohre zu befestigen sind.

Besonders geeignet ist die Vorrichtung für ein Rohr von Feuerlöschanlagen, das als galvanisch beschichtetes, pulverbeschichtetes oder lackiertes Rohr oder Präzisionsrohr, ausgeführt ist. Feuerlöschanlagen, beispielsweise Sprinkleranlagen oder andere Löschanlagen wie Gaslöschanlagen, in Gebäuden werden so montiert, dass von einer Hauptleitung in regelmäßigen Abständen Rohre die Nebenleitungen darstellen abzweigen, wobei in den Rohren Düsen beispielsweise Sprinklerdüsen für das Löschmittel angeordnet sind. In der Regel werden die abzweigenden Rohre mit dem Hauptrohr verschweisst und verlötet. Düsen oder Löschdüsen werden in der Regel direkt in das Rohr oder in einen Rohrstutzen mittels Gewinde eingeschraubt.

DE 94 119 79 U1 beschreibt eine übliche Möglichkeit ein Rohr oder eine Düse in einem Rohr einer Feuerlöschanlage anzuordnen indem ein Stutzen für das Einschrauben einer Düse oder ein Rohr angebracht wird. Die beschriebene Methode zum Herstellen von Abzweigungen setzt allerdings einen hohen Material- und Arbeitsaufwand beim Herstellen der Abzweigungen voraus. Weiterhin ist die Düse oder die Abzweigung immer da anzuordnen, wo sich der Stutzen befindet.

DE 38 18 746 C1 beschreibt eine Rohrabzweigung mit einem Stutzen für den Anschluss einer Abgangsleitung. Die Abgangsleitung welche in einem Bergwerksschacht eingesetzt wird, ist an einem mehrteiligen Stutzen mit Dichtungselementen auf das Rohr aufgesetzt. Die das Rohr umfassenden Teile werden miteinander verschraubt und bilden einen Ringraum um einen oder mehrere Querbohrungen des Rohres. Die Dichtungselemente wirken gegen eine dafür vorgesehene Aussparung des Rohres. Diese Rohrabzweigung ist für einen sehr robusten Betrieb vorgesehen, wobei in einem bestimmten Abstand von den Querbohrungen des Rohres Aussparungen vorhanden sein müssen, gegen die die Dichtung und Elemente der Rohrabzweigung wirken können. Damit ist der Ort einer Abzweigung am Rohr immer festgelegt. Für Präzisionsrohre oder für Rohre einer Feuerlöschleitung in einem Gebäude ist eine derartige Verbindung eher nicht geeignet.

KR 102 005 003 8365 A beschreibt eine Vorrichtung, nach der ein Sprinkler mit einem Stutzen an einer Rohrabzweigung befestigbar ist. Die Rohrabzweigung wird durch eine Schelle gehalten die das Rohr umgibt. Mit einem derartigen Element ist die Löschdüse oder ein Sprinkler schnell mittels Schraubverbindung an einem Rohr befestigbar, wobei die Gefahr besteht, dass sich die Schraubverbindung lockert oder löst, was zu Undichtigkeiten führen kann. Diese Lösung ist für Rohrabzweigungen eher ungeeignet.

Nachteilig an den Lösungen nach dem Stand der Technik ist, dass Verbindungen am Rohr für Düsen oder eine Abzweigung, die einen Stutzen zum Einschrauben vorsehen, mit erheblichem Arbeitsaufwand für die Fertigung oder das Einbringen der Düse verbunden sind. Lösungen, nach denen die Düse oder die Abzweigung am Rohr angebracht werden, unterscheiden sich baulich voneinander, sind zum Teil kompliziert in ihrer Fertigung und können in ihrer Funktion störanfällig sein.

Es ist daher Aufgabe der Erfindung, eine Vorrichtung zu entwickeln, mit der ein abzweigendes Rohr oder eine Düse an einem Rohr nach dem Baukastenprinzip einfach, funktionssicher und preiswert miteinander verbunden werden können.

Diese Aufgabe wird durch eine Vorrichtung nach den Merkmalen des ersten Patentanspruches erfüllt.

Unteransprüche geben vorteilhafte Ausgestaltungen der Erfindung wieder.

Die erfindungsgemäße Lösung beschreibt eine Vorrichtung zum Herstellen eines zum Durchleiten von Fluiden geeigneten Abzweiges an einem Rohr. Bei dem Rohr handelt es sich vorzugsweise um ein Präzisionsrohr. Weiterhin kann das Rohr ein handelsübliches kreisrundes Rohr aus Metall oder ähnlichem Material sein, dessen Aussendurchmesser im Bereich der Öffnung wie einer Bohrung keine Bearbeitung wie z. B. eine umlaufende Nut benötigt. Das Rohr muss zum Abzweigen eines Rohres auch nicht getrennt werden. Die genannten Rohre sind in der Feuerlöschtechnik dann üblich, wenn in einem Gebäude Sprinkleranlagen oder Feuerlöschanlagen installiert werden. Dabei handelt es sich um Rohre für ein fluides Medium. Quer zur Rohrachse ist am ringförmigen Körper eine Öffnung für eine Rohrabzweigung oder eine Düse angeordnet, damit das im Rohr befindliche Medium austreten kann.

Die Erfindung stellt einen in etwa ringförmigen Körper wie einen Hohlzylinder dar, der nach dem Baukastenprinzip nutzbar ist und den Aussendurchmesser des Rohres, auf das er aufgebracht wird, komplett umfasst. Der Innendurchmesser des Hohlzylinders ist geringfügig größer als der Aussendurchmesser des Rohres ist auf das er aufgebracht wird. Damit kann der ringförmige Körper problemlos auf das Rohr aufgesteckt werden.

Der ringförmige Körper kann vorgefertigt sein. Er kann aussen eine runde Form oder die Form eines Mehrkantes wie eines Sechskantes aufweisen. Vorteilhaft ist es, wenn dieser aus einer Stahlverbindung besteht. Andere geeignete Materialien wie Buntmetalle, Kunststoff oder Keramik sind denkbar.

Im ringförmigen Körper befinden sich mindestens drei umlaufende Nuträume, die zum Rohr hin offen sind, wobei mindestens zwei aussen befindliche Nuträume für Dichtungen angeordnet sind und einer der dazwischenliegenden Nuträume eine Öffnung, beispielsweise eine Bohrung, für die Düse oder das abzweigende Rohr aufweist.

In die Bohrung kann in geeigneter Weise ein abzweigendes Rohr oder eine Düse eingebracht werden. Eine vorteilhafte Lösung besteht darin, die Düse oder das abzweigende Rohr mittels Gewinde in eine Gewindebohrung in den ringförmigen Körper einzuschrauben. Das Rohr oder die Düse kann auch mittels einer anderen Verbindungstechnik wie Kleben, Schweissen oder Stecken angeschlossen werden. Damit besteht eine Nutraum zur fluidtechnischen Verbindung zwischen dem Rohr und der Düse oder dem abzweigenden Rohr, also zur Herstellung einer Verbindung zwischen dem umlaufenden Nutraum im ringförmigen Körper und der Düse oder dem abzweigenden Rohr zum Durchleiten des Fluids aus der Öffnung im Rohr, beispielsweise einer Bohrung, in das abzweigende Rohr oder die Düse.

Weiterhin ist es vorteilhaft, dass der mit der Düse oder dem abzweigenden Rohr in fluidtechnischer Verbindung stehende umlaufende Nutraum breiter ausgeführt ist, als die Breite der umlaufenden Nuträume für die Dichtungen.

Vorteilhaft ist es, wenn die vom Fluid durchströmte Querschnittsfläche des umlaufenden Nutraumes zwischen Rohr und ringförmigen Körper mindestens halb so groß ausgeführt ist wie die Querschnittsfläche der Öffnung im Rohr, durch die das Fluid in den Nutraum fließt, um Druckverluste und gleichzeitig die Größe des Nutraumes klein zu halten.

Vorteilhaft kann der ringförmige Körper eine weitere Befestigungsmöglichkeit wie eine Gewindebohrung aufweisen, um den ringförmigen Körper z.B. an Gebäudeteilen oder Einrichtungen befestigen und Kräfte wie Impulskräfte aus dem Fluidtransport aufnehmen zu können.

Um die Vorrichtung an dem Rohr anzuordnen, wird in jeden von mindestens zwei Nuträumen für eine Dichtung eine Dichtung eingebracht und der ringförmige Körper auf das Rohr aufgeschoben.

Die Dichtungen sind geeignet für eine druck- und fluiddichte Abdichtung des zwischen ihnen befindlichen Nutraumes. Sie wirken gegen den Aussendurchmesser des Rohres.

Im montierten Zustand ist ein Drehen der Vorrichtung und damit ein Ausrichten der Düse oder des abzweigenden Rohres ohne Verlust der Dichtwirkung möglich.

Der Nutraum ermöglicht, dass die Öffnung im Rohr und die Öffnung für die Düse oder das abzweigende Rohr nicht miteinander fluchtend angeordnet werden müssen.

Dadurch ist es möglich, die Öffnung in einer in einer für die Montage leicht zugänglichen Position einzubringen und die Düse oder das abzweigende Rohr anders auszurichten als die Öffnung im Rohr.

Vorzugsweise ist der Nutraum 360° umlaufend, so dass eine vollständige Drehbarkeit des ringförmigen Körpers gegeben ist. Es ist aber auch denkbar, den umlaufenden Nutraum nur auf einem Teil des Umfanges vorzusehen, z.B. auf 90°, wobei die Drehbarkeit dann eingeschränkt ist.

Als Dichtung können in vorteilhafter Weise O-Ringe angeordnet sein. Vor Einbau des O-Ringes oder auch einer anderen Dichtung ist es im Sinne einer äusseren Abdichtung vorteilhaft, wenn diese mit Fett versehen wird.

An einer dafür vorgesehenen Stelle sind in das Rohr, in dem eine Düse, ein abzweigendes Rohr oder Armatur angebracht werden soll, im dafür vorgesehenen Winkel eine oder mehrere Öffnungen, beispielsweise Bohrungen eingebracht. Die Vorrichtung zum Verbinden wird dann so verschoben, dass der umlaufende Nutraum des ringförmigen Körpers mit der oder den Bohrungen im Rohr übereinstimmt. Danach kann der ringförmige Körper auf dem dafür vorgesehenen Rohr fixiert werden.

Dazu ist es vorteilhaft, ein Element zur drehfesten und lagefesten Fixierung der Vorrichtung am Rohr anzuordnen. Dazu ist eine Bohrung im ringförmigen Körper für eine Befestigung angeordnet, so dass dieser, nachdem er sich in der vorgesehenen Position befindet, fixiert werden kann und nicht mehr auf dem Rohr verschiebbar ist.

Dazu ist es vorteilhaft, wenn in die Bohrung im ringförmigen Körper als Befestigung eine Schraube angeordnet ist, die in eine Gewindebohrung eingeschraubt wird.

Vorzugsweise wird als Schraube eine Stiftschraube verwendet.

Weiterhin ist es vorteilhaft, im umlaufenden Nutraum ein Sieb anzuordnen. Damit wird verhindert, dass Festigkeitspartikel im Hauptrohr in das abzweigende Rohr gelangen und ggf. zu Verstopfungen in den Düsen führen. Dies Sieb kann aus einem Gewebe, Metall oder Sintermaterial bestehen und die Funktion eines Filters übernehmen.

Die erfindungsgemäße Lösung hat den Vorteil, dass auf einem Rohr mit mindestens einer Öffnung, für ein austretendes Medium mit geringem Montage- und Fertigungsaufwand und nach dem Baukastenprinzip schnell und preiswert eine Düse oder ein abzweigendes Rohr angeordnet werden können.

Im Folgenden wird die Erfindung an zwei Figuren und einem Ausführungsbeispiel näher erläutert. Die Figuren zeigen:
- Figur 1:: Die Düse auf der Öffnung eines Rohres in schematischer Darstellung
- Figur 2:: Rohrabzweigung an der Öffnung eines Rohres in schematischer Darstellung.

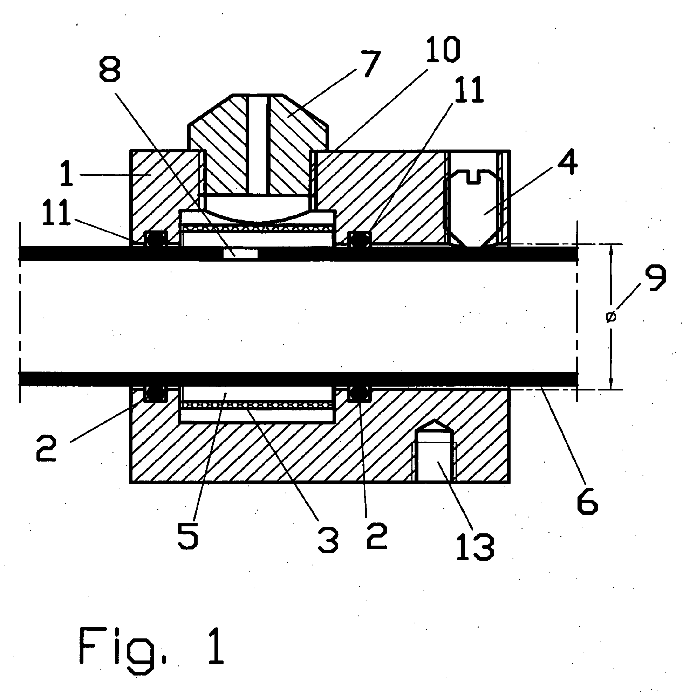

Die *Figur 1* zeigt das Rohr 6, in das als Öffnung eine Bohrung 8 eingebracht wurde, durch die das Medium im Rohr 6 austritt und durch die Düse 7 geleitet werden kann. Bei dem Rohr 6 handelt es sich um Präzisionsrohr einer Feuerlöschanlage. Bei der Düse 7 handelt es sich um eine Löschdüse 7. Durch das Rohr 6 soll im Brandfall eine Löschflüssigkeit auf einem Brandherd ausgebracht werden. Zunächst wird die Öffnung 8 in das Rohr 6 an die dafür vorgesehene Stelle eingebracht. Danach wird der ringförmige Körper 1 auf das Rohr 6 aufgeschoben. Der ringförmige Körper 1 weist zwei Nuträume 11 auf, in denen jeweils ein O-Ring 2 als Dichtung angeordnet ist. Zwischen den zwei Nuträumen 11 für die Dichtung 2 befindet sich ein Nutraum 5, der mit der Düse 7 in fluidtechnischer Verbindung steht. Zwischen der Düse 7 und dem ringförmigen Körper 1 befindet sich eine Gewindebohrung 10. Damit keine Partikel durch die Düse 7 ausgetragen werden, ist im Nutraum 5 ein Sieb 3 angeordnet. Nachdem der ringförmige Körper 1 entlang des Rohres 6 so verschoben und im Bereich der Bohrung 8 so verdreht wurde, dass der Nutraum 5 mit der Öffnung 8 des Rohres 6 übereinstimmt, wird die Schraube 4 in der Gewindebohrung festgeschraubt, so dass der ringförmige Körper 1 gegenüber dem Rohr 6 fixiert ist. Mittels der Befestigungsmöglichkeit 13 kann der ringförmige Körper 1 an einer geeigneten Stelle, wie einem Regal einer Gebäudewand oder einer Decke befestigt oder fixiert werden.

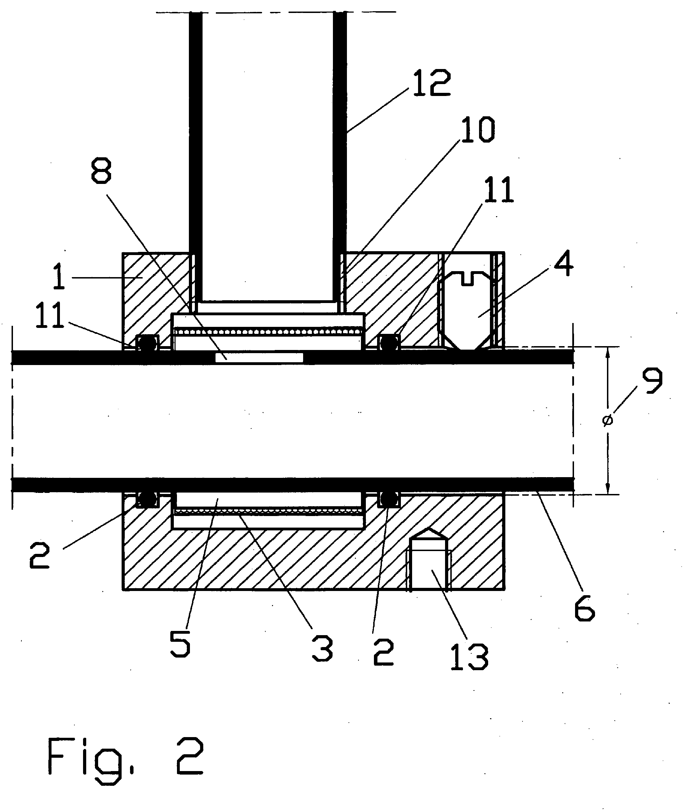

Die *Figur 2* zeigt den ringförmigen Körper 1 auf dem Rohr 6 mit dem Nutraum 5 über der Öffnung 8, wobei in die Gewindebohrung 10 das abzweigende Rohr 12 eingeschraubt ist. Alle weiteren Ausgestaltungen in der Darstellung sind in analoger Weise aufgebaut wie in Figur 1.

### Liste der verwendeten Bezugszeichen

- 1: Ringförmiger Körper
- 2: O-Ring
- 3: Sieb
- 4: Schraube
- 5: Nutraum zur fluidtechnischen Verbindung
- 6: Rohr
- 7: Düse
- 8: Öffnung in das Rohr 6
- 9: Innendurchmesser des ringförmigen Körpers 1
- 10: Gewindebohrung
- 11: Nutraum für Dichtung
- 12: Abzweigendes Rohr
- 13: Befestigungsmöglichkeit

## Patentansprüche

1. Vorrichtung zum Verbinden einer Düse (7) oder eines abzweigenden Rohres (12) mit einem zum Durchleiten von Fluiden geeigneten Rohr (6) mit mindestens einer Öffnung (8) im Rohr (6), durch die das Fluid aus dem Rohr (6) austreten kann, bestehend aus einem den Aussendurchmesser des Rohres (6) komplett umfassenden ringförmigen Körper (1), dessen Innendurchmesser (9) größer als der Aussendurchmesser des Rohres (6) ist, und einem im ringförmigen Körper (1) umlaufenden ersten Nutraum (5) zur Durchleitung von Fluid aus der Öffnung (8) im Rohr (6), wobei der erste Nutraum (5) zwischen mindestens zwei weiteren Nuträumen (11) liegt und die weiteren Nuträume (11) jeweils mit einer Dichtung eine druck- und fluiddichte Abdichtung gegen den Aussendurchmesser des Rohres (6) bewirken und die ersten und weiteren Nuträume (5, 11) zum Rohr (6) hin offen sind, und einer Öffnung für die Düse (7) oder das abzweigende Rohr (12) im ringförmigen Körper (1), die mit dem umlaufenden ersten Nutraum (5) in fluidtechnischer Verbindung steht, **dadurch gekennzeichnet, dass** eine Bohrung im ringförmigen Körper (1) zur dreh- und lagefesten Fixierung der Vorrichtung gegenüber dem Rohr (6) angeordnet ist und der ringförmige Körper (1) einen Hohlzylinder darstellt.

2. Vorrichtung nach Anspruch 1 **dadurch gekennzeichnet, dass** der vom Fluid durchströmte Querschnitt des ersten Nutraumes (5) zwischen Rohr (6) und ringförmigen Körper (1) mindestens halb so groß ausgeführt ist wie der Querschnitt der Öffnung (8).

3. Vorrichtung nach einem der Ansprüche 1 und 2, **dadurch gekennzeichnet, dass** als Dichtung ein O-Ring (2) angeordnet ist.

4. Vorrichtung nach einem der Ansprüche 1 bis 3, **dadurch gekennzeichnet, dass** im umlaufenden ersten Nutraum (5) ein Sieb (3) angeordnet ist.

5. Verwendung einer Vorrichtung nach einem der Ansprüche 1 bis 4, **dadurch gekennzeichnet, dass** das Rohr (6) ein Kunststoffrohr, ein galvanisch beschichtetes, pulverbeschichtetes oder lackiertes Rohr oder Präzisionsrohr aus Metall darstellt.

6. Verwendung einer Vorrichtung nach einem der Ansprüche 1 bis 5, **dadurch gekennzeichnet, dass** die Düse (7) oder das abzweigende Rohr (12) mittels Gewinde in einer Gewindebohrung (10) in der Öffnung des ringförmigen Körpers eingeschraubt ist.

7. Vorrichtung nach einem der Ansprüche 1 bis 6, **dadurch gekennzeichnet, dass** zur dreh- und lagefesten Fixierung der Vorrichtung gegenüber dem Rohr (6) eine Schraube (4) angeordnet ist.

8. Vorrichtung nach einem der Ansprüche 1 bis 7, **dadurch gekennzeichnet, dass** an dem ringförmigen Körper (1) eine Befestigungsmöglichkeit (13) angeordnet ist.

## Claims

1. A device for connecting a nozzle (7) or a branching pipe (12) with a pipe (6) adapted for conveying fluids, with at least one aperture (8) in the pipe (6) through which the fluid can escape the pipe (6), consisting of an annular body (1) completely encompassing the outer diameter of the pipe (6), the inner diameter (9) of the body being greater than the outer diameter of the pipe (6), and of a circumferential first groove space (5) in the annular body (1) for conveying fluid out of the aperture (8) in the pipe (6), wherein the first groove space (5) is located between at least two other groove spaces (11) and the groove spaces (11) cause a pressure- and fluid-tight sealing against the outer diameter of the pipe (6) respectively with one seal, and the first and other groove spaces (5, 11) are opened towards the pipe (6), and of an aperture in the annular body (1) for the nozzle (7) or the branching pipe (12), the aperture being in fluid communication with the circumferential first groove space (5), **characterized in that** a borehole is disposed in the annular body (1) for non-rotatable and firmly positioned fastening of the device on the pipe (6) and that the annular body (1) forms a hollow cylinder.

2. The device according to claim 1, **characterized in that** the cross-section of the first groove space (5) between the pipe (6) and the annular body (1) through which the fluid flows is designed to be at least half as big as the cross-section of the aperture (8).

3. The device according to one of the claims 1 and 2, **characterized in that** an O-ring (2) is disposed as a seal.

4. The device according to one of the claims 1 to 3, **characterized in that** a sieve (3) is disposed in the circumferential first groove space (5).

5. A use of a device according to one of the claims 1 to 4, **characterized in that** the pipe (6) is a plastic pipe, an electroplated, powder-coated or varnished tube or a precision pipe made of metal.

6. A use of a device according to one of the claims 1 to 5, **characterized in that** the nozzle (7) or the branching pipe (12) is screwed into the aperture of the annular body by means of a thread in a threaded bore (10).

7. The device according to one of the claims 1 to 6, **characterized in that** a screw (4) is disposed for a non-rotatable and firmly positioned fastening of the device on the pipe (6).

8. The device according to one of the claims 1 to 7, **characterized in that** a fastening possibility (13) is disposed on the annular body (1).

## Revendications

1. Dispositif pour relier une buse (7) ou un tube bifurquant (12) à un tube (6) apte à faire passer des fluides, avec au moins une ouverture (8) dans le tube (6), à travers laquelle le fluide peut s'échapper du tube (6), composé d'un corps (1) annulaire ceinturant entièrement le diamètre extérieur du tube (6), le diamètre intérieur (9) du corps étant plus grand que le diamètre extérieur du tube (6), et un premier espace de rainure (5) circonférentiel dans le corps (1) annulaire pour faire passer le fluide à travers l'ouverture (8) dans le tube (6), où le premier espace de rainure (5) se situe entre au moins deux autres espaces de rainure (11) et où les autres espaces de rainure (11) assurent avec respectivement un joint une étanchéité à la pression et aux fluides par rapport au diamètre extérieur du tube (6) et où les premiers et autres espaces de rainure (5, 11) sont ouverts en direction du tube (6), et d'une ouverture pour la buse (7) ou le tube bifurquant (12) dans le corps annulaire (1) reliée de manière fluidique au premier espace de rainure circonférentiel (5), **caractérisé en ce qu'**un trou est disposé dans le corps annulaire (1) pour une fixation immobile en rotation et dans une position fixe du dispositif par rapport au tube (6) et que le corps annulaire (1) est un cylindre creux.

2. Dispositif selon la revendication 1, **caractérisé en ce que** la coupe transversale du premier espace de rainure (5) entre le tube (6) et le corps annulaire (1) traversée par le fluide est au moins égale à la moitié de la coupe transversale de l'ouverture (8).

3. Dispositif selon l'une quelconque des revendications 1 et 2, **caractérisé en ce qu'**un joint torique (2) est disposé en tant que joint.

4. Dispositif selon l'une quelconque des revendications 1 à 3, caractrérisé en ce qu'un tamis (3) est disposé dans le premier espace de rainure (5) circonférentiel.

5. Utilisation d'un dispositif selon l'une quelconque des revendication 1 à 4, **caractérisée en ce que** le tube (6) est un tube en plastique, un tube revêtu par galvanisation, par poudrage ou verni ou un tube de précision en métal.

6. Utilisation d'un dispositif selon l'une quelconque des revendication 1 à 5, **caractérisée en ce que** la buse (7) ou le tube bifurquant (12) sont vissés dans l'ouverture du corps annulaire au moyen d'un filetage dans un trou fileté (10).

7. Dispositif selon l'une quelconque des revendications 1 à 6, **caractérisé en ce qu'**une vis (4) est disposée pour la fixation immobile en rotation et dans une position fixe du dispositif par rapport au tube (6).

8. Dispositif selon l'une quelconque des revendications 1 à 7, **caractérisé en ce qu'**une possibilité de fixation (13) est disposée sur le corps annulaire (1).
